# EUROPEAN PATENT APPLICATION

(11) **EP 4 459 371 A1**
(43) Date of publication of application: **06.11.2024**
(21) Application number: 24174041.4
(22) Date of filing: 03.05.2024
(51) Int. Cl.: G02F 1/35, G02F 1/365, G02F 1/39, H01S 3/10

(54) **WIDELY TUNABLE LASER SOURCE USING PARAMETRIC NONLINEAR EFFECT OF WAVE MIXING WITH CHIRPED PULSES AND METHOD OF BROADBAND TUNABLE LASER SOURCE USING PARAMETRIC NONLINEAR EFFECT OF WAVE MIXING WITH CHIRPED PULSES**

(30) Priority: 05.05.2023 PL 44476223
(71) Applicant: Instytut Chemii Fizycznej PAN, 01-224 Warszawa (PL); Université de Limoges, 87000 Limoges (FR); Centre National de la Recherche Scientifique, 75016 Paris (FR)
(72) Inventor: Krupa, Katarzyna, 05-070 Sulejówek (PL); Corso Silva, Cassia, 01-228 Warszawa (PL); Stepanenko, Yuriy, 01-494 Warszawa (PL); Couderc, Vincent, 87430 Verneuil-sur-Vienne (FR); Tonello, Alessandro, 87000 limoges (FR); Mansuryan, Tigran, 87100 Limoges (FR); Arosa-Lobato, Yago, 87000 Limoges (FR)
(74) Representative: Cabinet Chaillot

(57) **Abstract**

A first object of the invention is a widely tunable laser source characterized in that it includes a pulse oscillator, being a source of a first optical signal for pumping a first optical fibre, a fibre amplifier, a means for introducing a variable chirp into the first optical signal, a non-linear phase modulation generator, a broadband parametric wave mixing generator, wherein the non-linear phase modulation generator comprises a first optical fibre for generating phase self-modulation coupled to a second optical fibre in the broadband parametric wave mixing generator, wherein the second optical fibre is a single-mode or multi-mode optical fibre, the dispersion properties of the second fibre allowing the phase matching conditions to be met using a pump at the wavelength provided by the oscillator for the generation of the nonlinear wave mixing process, the first optical signal being in the form of pulses, the nonlinear phase modulation generator optionally including a lens or lenses for introducing the first optical signal into the first optical fibre. The invention also includes a method of broadband tunable laser source.

## Description

The present invention relates to the field of fibre laser technology and nonlinear optics. A laser source is disclosed which is tunable over a wide spectral range by varying the chirp of the pump pulses while keeping the central wavelength of the pump laser constant.

Light sources tunable over a wide spectral range are required for numerous applications, especially in biology, medicine and chemistry, for which the use of multicolour microscopy and nonlinear imaging spectroscopy, including various coherent Raman scattering techniques [D. Orringer, B. Pandian, Y. Niknafs, T. Hollon, J. Boyle, S. Lewis, M. Garrard, S. Hervey-Jumper, H. Garton, C. Maher, J. Heth, O. Sagher, D. Wilkinson, M. Snuderl, S. Venneti, S. Ramkissoon, K. McFadden, A. Fisher-Hubbard, A. Lieberman, and S. Camelo-Piragua, "Rapid intraoperative histology of unprocessed surgical specimen via fibre-lasased stimulated Raman scattering microscopy," Nature Biomed. Eng. 1, 27 (2017); C. Xu and F. W. Wise, "Recent advances in fibre lasers for nonlinear microscopy," Nat. Photonics 7, 875-882 (2013); M. Drobizhev, N. S. Makarov, S. E. Tillo, T. E. Hughes, and A. Rebane, 'Two-photon absorption properties of fluorescent proteins', Nat. Methods 8, 393 (2011); H. Ni, P. Lin, Y. Zhu, M. Zhang, Y. Tan, Y. Zhan, Z. Wang, and J.-X. Cheng, "Multiwindow SRS Imaging Using a Rapid Widely Tunable Fiber Laser," Anal. Chem. 93, 15703-15711 (2021)]. Until recently, achieving wide wavelength tunability required free-space optics and optical parametric oscillators (OPO) based on non-linear crystals that are pumped by water-cooled solid-state lasers. Such systems are large in size, expensive and sensitive to the external environment, making them unsuitable for use in non-laboratory settings, especially in clinical settings. Recent advances in non-linear fibre optics and fibre laser technology have allowed the development of fibre laser systems with tunable wavelengths in recent years. Such solutions are relatively inexpensive, compact and do not require justification. Moreover, such systems are insensitive to varying environmental conditions when constructed entirely of fibre optic components and polarisation-maintaining fibres. Providing stable operation due to their resistance to mechanical vibration, temperature changes and high humidity, these systems are well suited especially for applications in clinical settings, [W. Hansel, H. Hoogland, M. Giunta, S. Schmid, T. Steinmetz, R. Doubek, P. Mayer, S. Dobner, C. Cleff, M. Fischer, and R. Holzwarth. All polarization-maintaining fiber laser architecture for robust femtosecond pulse generation. Applied Physics B, 123.11.2016; X. Shen, W. Li, and H. Zeng. Polarized dissipative solitons in all-polarization-maintained fiber laser with long-term stable self-started mode-locking. Applied Physics Letters, 105: 101109-101109, 09 2014].

Currently available fibre amplification centres limit the operation of high-performance fibre lasers to spectral ranges near 1.0 pm, 1.55 µm and 1.9 µm. In contrast, fibre optic light sources that provide wavelength tunability outside these ranges are much less common. These take advantage of non-linear frequency conversion effects in optical fibres, such as the soliton self-frequency shift effect, in which the central wavelength of a short pulse propagating in anomalous dispersion increases due to stimulated Raman scattering [G. Sobon, T. Martynkien, D. Tomaszewska, K. Tarnowski, P. Merge, and J. Sotor, "All-in-fiber amplification and compression of coherent frequency-shifted soliton tunable in the 1800-2000 nm range," Phot. Research 6, 368-372 (2018)], as well as its combination with soliton self-mode conversion recently observed in multimode optical fibres [L. Rishoj, B. Tai, P. Kristensen, and S. Ramachandran, 'Soliton self-mode conversion: revisiting Raman scattering of ultrashort pulses,' Optica 6, 304-308 (2019)]. Another approach, although fraught with relatively low power density, is based on supercontinuum generation (SCG) combined with its narrow-band filtering [E. Genier, S. Grelet, R. D. Engelsholm, P. Bowen, P. M. Moselund, O. Bang, J. M. Dudley, and T. Sylvestre, "Ultra-flat, low-noise, and linearly polarised fibre supercontinuum source covering 670-1390 nm," Opt. Lett. 46, 1820-1823 (2021); J. M. Dudley, G. Genty, S. Coen, "Supercontinuum generation on photonic crystal fiber," Rev. of Modern Physics 78, 1135-1184, (2006)]. A solution to obtain higher energy but at the expense of a smaller tuning range is to use the Self-Phase-Modulation (SPM) effect, in which providing adequate spectral filtering of one of the resulting spectral striations allows the wavelength to shift towards red or blue [R. Chen, and G. Chang, "Pre-chirp managed self-phase modulation for efficient generation of wavelength-tune-nable energetic femtosecond pulses," JOSAB 37, 2388 (2020); H-Y Chung, W. Liu, Q. Cao, L. Song, F. X. Kartner, and G. Chang, "Megawatt peak power tunable femtosecond source based on self-phase modulation enable spectral selection," Opt. Express 26, 3684 (2018)]. Finally, Four-Wave- Mixing (FWM), on the other hand, allows the advantage of both previously mentioned effects, i.e. to directly achieve broad and selective wavelength tuning at high power, especially using a seeding or cavity configuration. To date, various schemes have been proposed for the fibre optic parametric oscillator (FOPO), fibre optic parametric amplifier (FOPA) and fibre optic pulse amplifier with chirp (FOPCPA). However, in all of the currently existing systems, wavelength tunability is only provided by tuning the pump wavelength [M. Brinkmann, A. Fast, T. Hellwig, I. Pence, C. L. Evans, and C. Fallich, "Portable all-fiber dual-output widely tunable light source for coherent Raman imaging," Biomedical Optics Express 10, 4437-4449 (2019); Th. Gottschall, T. Meyer, M. Schmitt, J. Popp, J. Limpert, and A. Tunnermann, "Four-wave-mixing-based optical parametric oscillator delivering energetic, tunable, chirped femtosecond pulses for nonlinear biomedical applications," Opt. Express 23, 23968 (2015); M. Chemnitz, M. Baumgartl, T. Meyer, C. Jauregui, B. Dietzek, J. Popp, J. Limpert, and A. Tunnermann, "Widely tuneable fiber optical parametric amplifier for coherent anti-Stokes Raman scattering microscopy," Opt. Opt. Express 20, 26583 (2012); W. Fu and F. W. Wise, "Normal-dispersion fiber optical parametric chirped-pulse amplification," Optics Letters 43, 5331-5334 (2018); W. Fu, R. Herda, and F. W. Wise, "Design guidelines for normal-dispersion optical fibre parametric chirped-pulse amplifiers," JOSAB 37, 1790 (2020)]. The effect of chirped pump pulses on the effect of SPM and FWM has already been investigated in the past, however, when both processes were treated separately. In the course of these studies, it was shown that the two side spectral bands generated by SPM can change their wavelength with a change in the value of the chirp. [R. Chen, and G. Chang, 'Pre- chirp managed self-phase modulation for efficient generation of wavelength-tunable energetic femtosecond pulses', JOSAB 37, 2388 (2020)]. In the context of the FWM effect, however, it has been reported that chirp can modify the way in which the pump pulse spectrum shifts into the signal and idle FWM bands, allowing the spectral width of these bands to be varied without reducing the power of these beams. [W. Fu, R. Herda, and F. W. Wise, 'Design guidelines for normal-dispersion optical fibre parametric chirped-pulse amplifiers', JOSAB 37, 1790 (2020)]. Chirped femtosecond pulses have also been used to obtain different wavelengths at different time instants, however, only over a relatively small spectral range, typically limited to about 10nm [S. Saint-Jalm, P. Berto, L. Jullien, E. Ravn Andresen, and H. Rigneault, 'Rapidly tunable and compact coherent Raman scattering light source for molecular spectroscopy', J. Raman Spectroscopy 45, 515-520 (2014)].

The problem posed by the invention is to provide a laser signal source that could be tunable over a wide range without changing the wavelength of the pumping signal. At the same time, such a source should be possible to construct using only optical fibres as optically active centres. Another problem would be to provide a means of broadband tunability of the wavelength of the pumping signal.

A first object of the invention is a broadband tunable laser source characterized in that it comprises a pulse oscillator, being a source of a first optical signal for pumping a first optical fibre, a fibre amplifier, a means for introducing a variable chirp into the first optical signal, a non-linear phase modulation generator, a broadband parametric wave mixing generator, wherein the non-linear phase modulation generator comprises a first optical fibre for generating phase self-modulation coupled to a second optical fibre in the broadband parametric wave mixing generator, wherein the second optical fibre is a single-mode or multi-mode optical fibre, the dispersion properties of the second fibre allowing the phase matching conditions to be met using a pump at the wavelength provided by the oscillator for the generation of the non-linear wave mixing process, the first optical signal being in the form of pulses, the non-linear phase modulation generator optionally comprising a lens or lenses for introducing the first optical signal into the first optical fibre.

In an advantageous implementation of the invention, the pulse oscillator is a fibre laser with passive modal synchronisation, the amplifying medium being an optical fibre doped with rare earth elements.

In a further advantageous implementation of the invention, the fibre optic amplifier comprises a fibre optic isolator, a fibre optic wavelength division multiplexer, a fibre optic isolator operating at a wavelength adapted to the wavelength of the laser diode, a fibre optic laser diode, the amplifying medium being a fibre optic doped with rare earth elements.

In a further advantageous implementation of the invention, the means for introducing variable chirp into the pump pulses is selected from a group comprising: movable optical diffraction elements, advantageously diffraction gratings or prisms, two chirped fibres with Bragg gratings of opposite dispersion, at least one of the gratings being tunable, an ultrafast pulse shaping system or a long section of optical fibre.

In another favourable implementation of the invention, the fibre for the generation of phase self-modulation in a non-linear phase modulation generator is a passive optical fibre with a solid core.

In yet another advantageous implementation of the invention, the non-linear wave mixing process represents a mixing of four or a mixing of three waves.

In yet another advantageous implementation of the invention, the optical fibre for wave mixing generation is a photonic and/or microstructured fibre.

In yet another advantageous implementation of the invention, the optical fibres are polarisation state-preserving fibres.

In a further advantageous implementation of the invention, it comprises a cavity containing either a non-linear phase modulation generator (1400) and a broadband parametric waveform mixing generator (1500) or only a broadband parametric waveform mixing generator (1500), allowing temporal and spatial synchronisation of the pump pulses generated in the pump oscillator cavity with the newly generated wavelength in the non-linear waveform mixing process.

In a further advantageous implementation of the invention, the first optical fibre for phase self-modulation generation is connected via a splice to a second optical fibre for wave mixing generation.

In an advantageous implementation of the invention, the second optical fibre has an imprinted second-order non-linearity.

A second object of the invention is a method for broadband tuning of a laser source, characterised in that the first optical fibre of the non-linear phase modulation generator is optically pumped with a first optical signal, in the normal dispersion regime using a pulse oscillator to generate a second laser signal for optical pumping of the second optical fibre in the broadband wavelength mixing generator to generate a third optical signal and a fourth optical signal, whereby the third and fourth optical signals have different wavelengths than the first optical signal, and a variable chirp is introduced into the first optical signal prior to the optical pumping of the first optical fibre using a means for introducing variable chirp into the pump pulses to change the wavelengths of the third optical signal and the fourth optical signal.

In a preferred embodiment of the invention, the first optical signal is linearly polarised along the free axis of the first fibre.

In a further preferred embodiment of the invention, the first optical signal is inserted into the first optical fibre along its free axis.

In another preferred embodiment of the invention, the second optical fibre is pumped in the weakly normal dispersion or weakly anomalous dispersion regime.

In another preferred embodiment of the invention, the chirp has either linear or non-linear characteristics.

In yet another preferred embodiment of the invention, the second optical fibre has an imprinted second-order non-linearity.

In yet another preferred embodiment of the invention, the wavelength variation of the third optical signal and the fourth optical signal is achieved either by mixing four waves or by mixing three waves.

In yet another preferred embodiment of the invention, the second optical fibre is seeded with a continuous optical signal at the wavelength at which the third optical signal and the fourth optical signal are generated, or is self-seeded by temporal-spatial synchronisation with the pump pulses.

The present invention will be described in detail with reference to the individual figures which show:
Fig. 1 shows a schematic of a widely tunable laser source according to the present invention.
Fig. 2 shows the construction of a fibre optic amplifier according to the present invention.
Fig. 3 once, figures 5 to 9 show examples of the implementation of a widely tunable fibre laser source according to the present invention.
Fig. 4 shows exemplary experimental results of wavelength tuning obtained from a fibre optic light source realised according to the scheme in Fig.3:
   (a) Experimental spectra obtained at different pump pulse durations with chirp for a peak power of 10kW.
   (b) Spectra of FWM sideband signals (i.e. blue-shifted wavelengths) obtained using 5.5 ps pump pulses with chirped linear polarisation directions of 0° (black), 16° (grey, dotted), 32° (grey, dashed), 45° (black, dashed) and 90° (grey); 0° and 90° are the directions of the neutral axes of the first optical fibre holding the polarisations.
   (c) Spectra of FWM idler sidebands (i.e. redshifted wavelengths) obtained using 5.5 ps pump pulses with chirped linear polarisation directions of 0° (black), 16° (grey, dotted), 32° (grey, dashed), 45° (black, dashed) and 90° (grey); 0° and 90° are the directions of the neutral axes of the first optical fibre holding the polarisations.

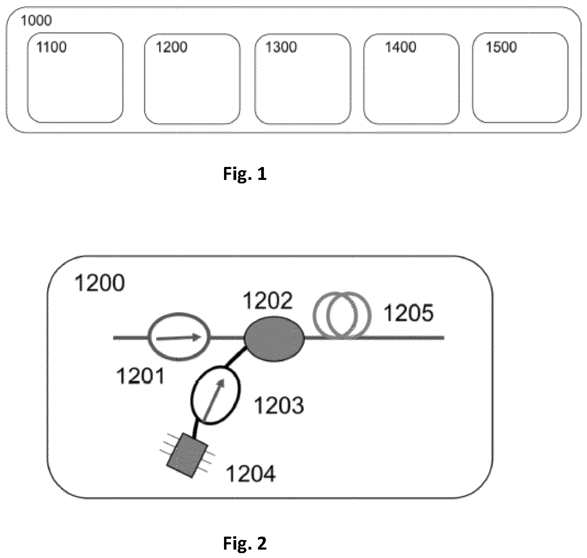

As shown in Fig. 1, the broadly tunable laser source (1000) consists of an ultrafast pulsed oscillator (1100), a fibre amplifier (1200), a variable chirp input device for pumping pulses (1300), a non-linear Self-Phase-Modulation generator (1400) and a broadband parametric wave mixing generator (1500).

The pulsed oscillator (1100) is an arbitrary fibre laser with passive modal synchronisation and an amplifying medium in the form of a fibre doped with rare earth elements, used to generate ultra-short pulses that serve as pumping pulses for the phase auto-modulation generator (1400) and then the wave mixing generator (1500).

The optical fibre amplifier (1200) is a single-stage or multistage device for increasing the power of the pumping beam from the oscillator (1100) and, as shown in Fig. 2 it comprises a fibre optic isolator operating at a wavelength matched to the wavelength of the oscillator (1100) (1201), a fibre optic beam splitter (1202), a fibre optic laser diode (1204), a fibre optic isolator operating at a wavelength matched to the wavelength of the laser diode (1203) and an amplification medium in the form of a rare earth doped fibre optic (1205) providing amplification at a wavelength matched to the wavelength of the oscillator (1100). All these fibre elements are welded together in the sequence shown in Fig.2 to produce an all-fibre amplifier.

The amplifying medium in the form of a fibre doped with rare earth ions (1205) is optically pumped through a wavelength division multiplexer (1202) by a laser diode (1204) with a wavelength adapted to the absorption curve of the amplifying medium (1205). Optical isolators (1203) and (1201) serve to protect the laser diode (1204) and the part of the device in front of the amplifier, respectively, from potential back reflection of the propagating beams.

The device for the introduction of variable chirp into the pump pulses (1300) can be provided by the use of movable diffractive optical elements, advantageously diffraction gratings or prisms, or a combination of two chirped fibre Bragg gratings with opposite dispersion sign, including at least one grating with tunable dispersion, either by a long fibre section or by an ultrafast pulse shaping system.

The position of the fibre amplifier (1200) and the pump pulse chirp input device (1300) can be swapped if necessary.

The non-linear SPM generator (1400) may be provided by any type of optical fibre in which SPM generation can be initiated, advantageously a standard passive fixed-core optical fibre. In the case of SPM generation already in the amplifier fibre used in the amplifier (1200), it may be possible to remove the SPM generator (1400).

The broadband wave mixing generator (1500) can be provided by any type of optical medium, advantageously a single-mode and multi-mode optical fibre, whose dispersion properties allow the phase matching conditions to be met, using a pump at the wavelength provided by the oscillator (1100), for the nonlinear wave mixing process (four-wave mixing or three-wave mixing in media with third- and second-order nonlinearity, respectively), advantageously a photonic optical fibre with a dispersion adapted to the generation of four-wave mixing. In order to enhance the effect of the parametric wave mixing, it can be seeded with an additional continuous wave at the wavelength of the generated sideband or self seeded by placing the SPM generator (1400) with the parametric wave mixing generator (1500) or only the parametric wave mixing generator (1500) in a cavity in a free space constructed or in a cavity constructed of optical fibres in such a way that the newly generated wavelength will be temporally and spatially synchronised with the pump pulses generated in the cavity of the pump oscillator (1100).

In all of the above cases, the optical fibres are advantageously polarisation-maintaining fibres and, when they are spliced, their neutral axes must match.

Unexpectedly, however, it was found that by combining the effect of phase self-modulation and four-wavelength mixing, broad wavelength tuning could be achieved simultaneously or separately within the spectral ranges shifted towards blue and/or red wavelengths, changing only the chirp of the pump pulses while keeping the pump wavelength constant. This solution does not require the use of an oscillator as a pump that allows wavelength tuning in the range of at least 30 nm, as is the case with currently available solutions. In addition, such a system can be built using only optical fibres, which significantly affects its manufacturing cost.

The present invention will now be further illustrated by means of example diagrams of the implementation of the device, with reference to the above figures:

### Example 1.

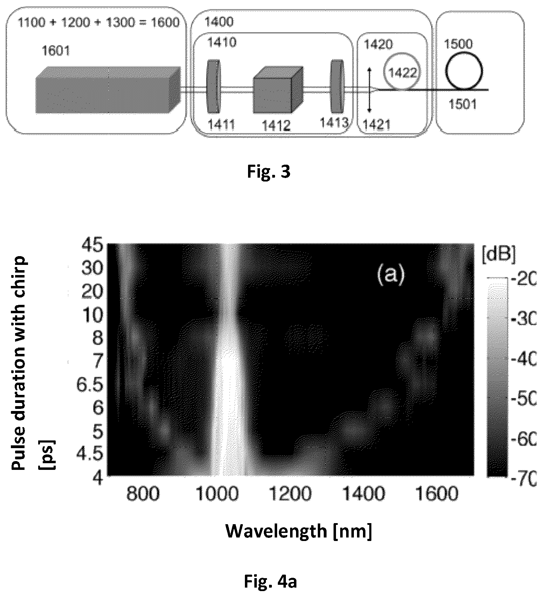

The laser source shown in Fig.3 allows for the provision of broad wavelength tuning in the range of 750 nm to 945 nm and/or 1220 nm to 1645 nm, which is possible by varying the chirp of the pumping pulses and thus the duration of the pulses, while keeping the central wavelength of the pumping pulses constant. The laser source consists of a commercial ultrafast fibre laser (from Spark laser) delivering 2 MHz 300 fs pulses at a central wavelength of 1030 nm, which can then be stretched to 100 ps (1601) when the chirp is introduced. The laser beam power and linear polarisation direction are controlled by a polarisation beam splitter (1412) positioned between two half-waves (Thorlabs) (1411, 1413). The input beam is introduced with maximum coupling efficiency into a few centimetres piece of standard single-mode polarisation-maintaining optical fibre (PM980), here about 15cm long (1422), and linearly polarised along the free axis of this fibre. A lens (1421) with a focal length selected to maximise the coupling efficiency to approximately 75% was used to introduce the beam into the optical fibre. As the pumping beam is introduced into the optical fibre from free space in this example, the use of a lens is necessary. For all-fibre systems, as in the examples shown below, lenses are not necessary. The first optical fibre, which here is a PM980-type optical fibre, was welded to a second 50 cm-long microstructured optical fibre also maintaining a polarised state (NKT LMA-PM-5) (1501), whose zero dispersion wavelength (ZDW) is close to 1060 nm. The weld of these two optical fibres was made to match their polarisation axes. Since a pump at 1030 nm was used and the zero dispersion wavelength of the second microstructured fibre (PCF) is close to 1060nm, this fibre is pumped in the weak normal dispersion regime. Thus, once phase self-modulation is initiated in the PM980 fibre (1422), and continues in the second microstructured fibre (PCF) (1501) in its first few cm, a four-wave mixing effect is generated. It is known to one skilled in the art that, in order to generate FWM, the PCF fibre should preferably be pumped in normal or anomalous dispersion.

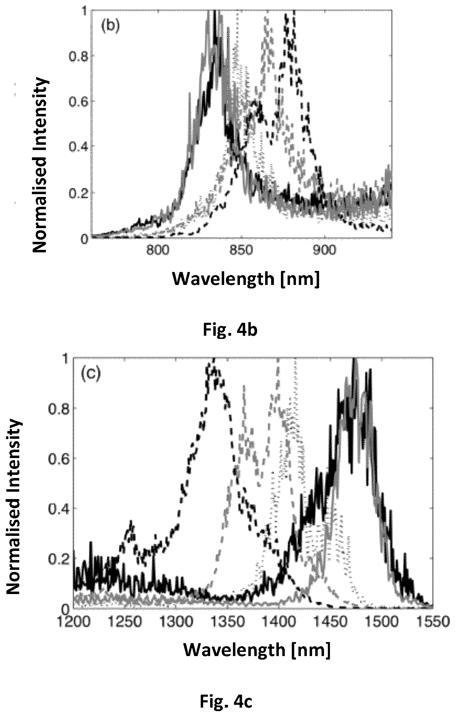

Panel (a) in Fig. 4 shows the output spectra obtained at different chirp values of the pumping pulses. It can be seen the appearance of a pair of four-wave mixing sidebands, whose wavelength varies with the duration of the chirp pulse. By stretching the pulse from about 4 ps to about 30 ps ahead of the PM980 fibre (1422), it is possible to shift both FWM sidebands at the output of the microstructured fibre (1501) from about 945 nm down to about 750 nm for the 'blue' signal sideband and from about 1220 nm to about 1645 nm for the 'red' idle sideband. The tunability of the wavelength depends on the central wavelength of the pump laser (1601) and the dispersive properties of the second fibre (PCF) (1501), which must be carefully selected. Thus, in the general case, wavelength tuning can be carried out in any part from the visible to the infrared spectral range.

FWM is a non-linear process in which two pumping photons can be transformed into a blue-shifted signal photon and an infrared-shifted idler photon. When the energy conservation and phase-matching conditions dependent on the dispersive properties of the optical fibre are met, we can effectively generate a pair of such sidebands, with the ability to tune their wavelengths by varying the wavelength of the pump pulses.

In the present experiment, however, the pump wavelength remained unchanged. Nevertheless, the tunability of the four-wave mixing (FWM) sidebands could be observed by combining the SPM phase self-modulation effect of the chirped pulses initiated in the first optical fibre, PM980, (1422), with the four-wave mixing effect of the FWM generated in the second microstructured optical fibre, NKT LMA-PM-5, (1501).

As mentioned above, pulses with chirp in the presence of SPM can give rise to two lateral bands that change their spectral position at different values of chirp. For a certain value of chirp, these two striations can have a significant spectral power density and thus can play the role of a tunable pump. Therefore, we could observe that when the chirp increases, the bar closer to the zero dispersion of the PCF fibre decreases its wavelength, which causes the FWM sideband pair to move closer to the pump wavelength. On the contrary, when the chirp decreases, the rod closer to the zero dispersion of the PCF fibre increases its wavelength, thus moving the four-wave mixing bands away from the central pump wavelength. However, it is worth noting that the SPM-based spectral broadening generated in the first PM980 fibre (1422) is not sufficient to produce such a significant shift of the FWM sidebands as shown in panel (a) of Fig.4. Indeed, the SPM generation of the pump continues in the first centimetres of the microstructured fibre until the beginning of the FWM generation, now reaching a value (spectral broadening) large enough to explain the observed spectral shift of the FWM sidebands.

Furthermore, we also achieved additional tuning of the sideband positions by exploiting the birefringence of the optical fibre. In this case, the direction of the input linear pump polarisation was changed while keeping the input pulse chirp constant. The results are shown in panels (b) and (c) of Fig.4. They show spectra for the signal band and idler mixing of the four waves, respectively, for different polarisation directions, and for a fixed pump pulse duration (5.5 ps). The polarisation direction varied from 0° to 90°, corresponding to the two main axes of the PM980 (1422) optical fibre (Fig. 4b-4c) .

The above-described tuning was achieved by a third-order non-linear process, i.e. four-wave mixing (FWM). It will be obvious to a person skilled in the art that a similar effect will also be true for the second-order non-linear effect of three-wave mixing (TWM). The only requirement is that the second fibre must have an 'imprinted' second-order non-linearity factor allowing the FWM to be replaced by the TWM process.

### Example 2.

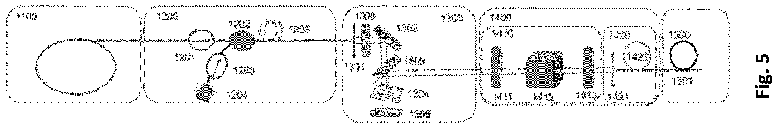

Figure 5 shows a modification of the laser source described in Example 1, in which, instead of a commercially available pumping laser already delivering pulses of adjustable duration, a pumping laser is used which is any type of ultrafast fibre-optic oscillator delivering femtosecond pulses limited by Fourier or chirped picosecond pulses that can be compressed to femtoseconds, which are further amplified by the above-described (Fig. 2) a fibre optic amplifier with a suitable amplifying means (1200), which is connected to a fibre optic oscillator (1100) . The string of such amplified pulses is then stretched or shortened using a device comprising a lens (1301) to collimate the beam and feed into the device, three optical mirrors (1302, 1305), a beam splitter (1303) to redirect part of the beam to the output, and a set of movable dispersive optical elements (1304) such as diffraction gratings or prisms to produce an output beam of variable pulse duration. Half-wave plates (11306) to adjust the polarisation direction of the beam entering the compressor/extender to match the polarisation properties of the diffractive elements.

### Example 3.

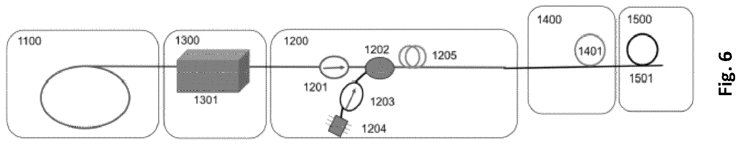

Figure 6 shows a modification of the laser source described in Example 2, in which, instead of a pulse stretching/compression device, a device based on an ultrafast pulse shaping circuit (1301) allowing simultaneous and independent phase and amplitude control (of the type Dazzler - acousto-optic programmable dispersive filter AOPDF; Fastlite) is used. In this case, the beam coming out of the pulse shaping system being in an optical fibre can be re-amplified in a fibre amplifier (1200), which can then be welded with two optical fibres connected (welded), namely an optical fibre providing SPM generation (1401) and a microstructure fibre (1401) for non-linear wave mixing generation (1501).

### Example 4.

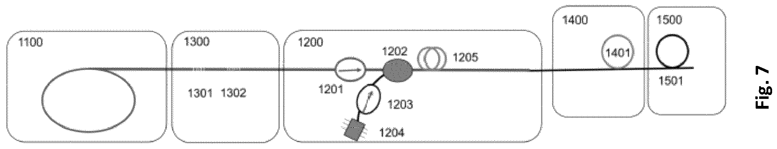

Figure 7 shows a further modification of the laser source described in Example 3, where, instead of using an ultrafast pulse shaping system, a set of chirped fiber Bragg gratings (CFBG) with adjustable opposite-sign dispersion are used to enable pulse duration tuning (1301 and 1302). Pulse amplification can also be performed between two CFBGs.

### Example 5.

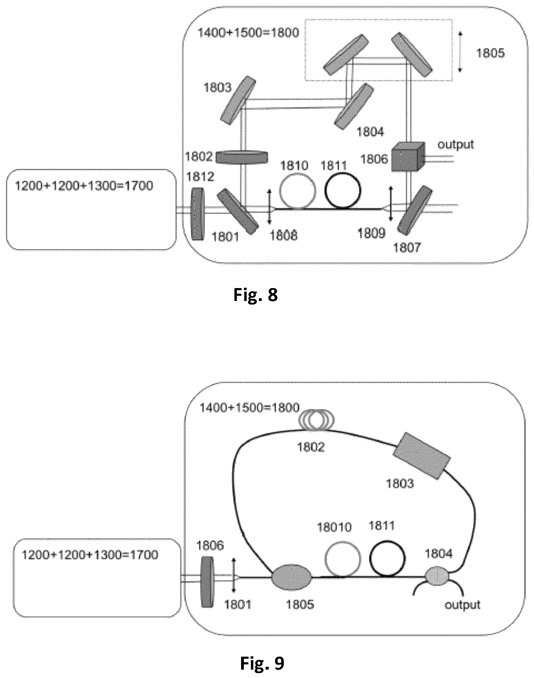

Figure 8 shows a further modification of the laser source described in examples 1-4, wherein a set of two fibres (one initiating SPM (1810) and a second fibre for FWM generation (1811)) or only the second fibre for FWM generation (1811) is placed in a cavity that preferably comprises optical mirrors (1803, 1804), optical dichroic mirrors (1801, 1807), a beam splitter (1806) to extract a portion of the output beam, and waveplates (1802, 1812) to adjust the polarisation of the beam so that it enters the fibres along their free axis, a tunable delay line comprising mirrors or prisms (1805) which are arranged to vary the path of the beam along its propagation so as to temporally synchronise the newly generated pulses circulating in the cavity with the pulses entering the cavity. The lenses (1808 and 1809) are designed to introduce the beam into the fibre and then collimate the beam exiting the fibre to allow it to circulate in the cavity.

### Example 6.

Figure 9 shows a further modification of the laser source described in Example 5, in which the cavity is fully composed of standard optical fibres and optical fibre elements, including advantageously optical couplers (1804) for routing part of the beam out of the cavity as an output beam, wavelength division multiplexers (1805) for introducing chirped pump pulses into the cavity and causing it to circulate unidirectional in the cavity, an additional optical fibre (1802) and a fibre optic delay line (1802) for temporally synchronising newly generated pulses circulating in the cavity with the pump pulses entering the cavity. The input chirped pump pulses are introduced into the cavity via fibre optic multiplexer-type components for wavelength division. The wave plate (1806) is intended to regulate the direction of linear polarisation of the beam so that it enters the optical fibres along their free axis.

## Claims

1. A widely tunable laser source, **characterized in that** it includes a pulse oscillator (1100) providing a source of a first optical signal for pumping a first optical fibre, a fibre amplifier (1200), a means for introducing a variable chirp into the first optical signal (1300), a non-linear phase modulation generator (1400), a broadband parametric wave mixing generator (1500), wherein the non-linear phase modulation generator (1400) includes a first optical fibre for phase self-modulation coupled to a second optical fibre in the broadband parametric wave mixing generator (1500), wherein the second optical fibre is a single-mode or multi-mode optical fibre, wherein the dispersion properties of the second fibre allowing the phase matching conditions to be met using a pump at the wavelength provided by the oscillator (1100) for the generation of the non-linear wave mixing process, the first optical signal being in the form of pulses, the non-linear phase modulation generator (1400) optionally includes a lens or lenses for introducing the first optical signal into the first optical fibre.

2. The laser source according to claim 1, **characterised in that** the pulsed oscillator (1100) is a fibre laser with passive modal synchronisation, wherein the amplifying medium being an optical fibre doped with rare earth elements.

3. The laser source according to claim 1, **characterised in that** the fibre amplifier (1200) includes a fibre optic isolator (1201), a fibre optic wavelength division multiplexer (1202), a fibre optic isolator operating at a wavelength adapted to the wavelength of the laser diode (1203), a fibre optic laser diode (1204), the amplifying medium being a fibre optic doped with rare earth elements (1205).

4. The laser source according to claim 1, **characterised in that** the means for introducing variable chirp (1300) into the pump pulses is selected from a group including: movable optical diffraction elements, advantageously diffraction gratings or prisms, two chirped fibres with Bragg gratings of opposite dispersion, wherein at least one of the gratings being tunable, an ultrafast pulse shaping system or a long section of optical fibre.

5. The laser source according to claim 1, **characterised in that** the fibre for the generation of phase self-modulation in the non-linear phase modulation generator (1400) is a passive optical fibre with a solid core.

6. The laser source according to claim 1, **characterised in that** the non-linear wave mixing process is a mixing of four waves or a mixing of three waves.

7. The laser source according to claim 1, **characterised in that** the optical fibre for wave mixing generation is a photonic and/or microstructured fibre.

8. The laser source according to any of the preceding claims, **characterised in that** the optical fibres are polarisation preserving fibres.

9. The laser source according to claim 1, **characterised in that** it includes a cavity containing a non-linear phase modulation generator (1400) and a broadband parametric waveform mixing generator (1500) or only a broadband parametric waveform mixing generator (1500), allowing temporal and spatial synchronisation of the pump pulses generated in the pump oscillator cavity with the newly generated wavelength of the mixing process.

10. The laser source according to claim 1, **characterised in that** the first optical fibre for phase self-modulation generation is connected by means of a weld to the second optical fibre for wave mixing generation.

11. The laser source according to claim 1, **characterised in that** the second optical fibre has an imprinted second-order non-linearity.

12. The method of broadband tunable laser source, **characterised in that** the first optical fibre of a non-linear phase modulation generator (1400) is optically pumped with a first optical signal, in the normal dispersion regime using a pulse oscillator (1100) to generate a second laser signal to optically pump the second optical fibre in a broadband wave mixing generator (1500) to generate a third optical signal and a fourth optical signal, wherein the third and fourth optical signals have different wavelengths than the first optical signal, and a variable chirp is introduced into the first optical signal prior to the optical pumping of the first optical fibre using the variable chirp introduction means for pump pulses (1300) to change the wavelengths of the third optical signal and the fourth optical signal.

13. The method according to claim 12, **characterised in that** the first optical signal is linearly polarised along the free axis of the first fibre.

14. The method according to claim 12 or 13, **characterised in that** the first optical signal is introduced into the first optical fibre along its free axis.

15. The method according to claim 12, **characterised in that** the second optical fibre is pumped in the regime of weakly normal dispersion or weakly anomalous dispersion.

16. The method according to claim 12, **characterised in that** the chirp has either linear or non-linear characteristics.

17. The method according to claim 12, **characterised in that** the second optical fibre has an imprinted second-order non-linearity.

18. The method according to claim 12 or 17, **characterised in that** the change of the wavelength of the third optical signal and the fourth optical signal is obtained by mixing four waves or by mixing three waves.

19. The method according to claims 12, 17 or 18, **characterised in that** the second optical fibre is seeded with a continuous optical signal at the wavelength at which the third optical signal and the fourth optical signal are generated or is self-seeded by temporal-spatial synchronisation with the pump pulses.
